# FASCICULE DE BREVET EUROPEEN

(11) **EP 4 097 268 B1**
(45) Date de publication et mention de la délivrance du brevet: **10.12.2025**
(21) Numéro de dépôt: 21706646.3
(22) Date de dépôt: 29.01.2021
(51) Int. Cl.: B23P 15/02

(54) **TRAITEMENT THERMIQUE À COMPRESSION ISOSTATIQUE À CHAUD DE BARREAUX EN ALLIAGE D'ALUMINURE DE TITANE POUR AUBES DE TURBINE BASSE PRESSION DE TURBOMACHINE**
WÄRMEBEHANDLUNG DURCH HEISSISOSTATISCHES PRESSEN VON STÄBEN AUS EINER TITANALUMINID-LEGIERUNG FÜR NIEDERDRUCKTURBINENSCHAUFELN EINER TURBOMASCHINE
HOT ISOSTATIC PRESSING HEAT TREATMENT OF BARS MADE FROM TITANIUM ALUMINIDE ALLOY FOR LOW-PRESSURE TURBINE BLADES FOR A TURBOMACHINE

(30) Priorité: 31.01.2020 FR 2000949
(43) Date de publication de la demande: 07.12.2022
(73) Titulaire: SAFRAN AIRCRAFT ENGINES, 75015 Paris (FR)
(72) Inventeur: PONSEN, Damien, 77550 Moissy-Cramayel (FR); MARTIN, Guillaume Paul, 77550 Moissy-Cramayel (FR); GÜTHER, Volker, 90431 Nürnberg (DE)
(74) Mandataire: Regimbeau
(86) Numéro de dépôt international: PCT/FR2021/050174
(87) Numéro de publication internationale: WO 2021/152274

(56) Documents cités:
- EP-A2- 2 641 984
- GB-A- 2 293 629
- US-A- 5 296 056
- US-A- 5 350 466
- US-A- 5 609 698
- US-A1- 2013 251 537

## Description

### DOMAINE DE L'INVENTION

La présente invention concerne la fabrication d'aubes en alliage d'aluminure de titane pour turbine basse pression de turbomachine pour aéronef.

Elle propose notamment un procédé de traitement thermique de barreaux en alliage d'aluminure de titane pour aubes de turbine basse pression de turbomachine.

### ETAT DE LA TECHNIQUE ET PROBLEMATIQUE GENERALE

### Rappels généraux sur les turbomachines

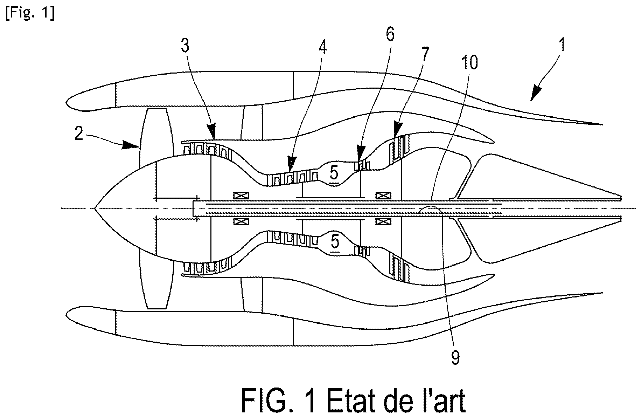

Un turboréacteur axial à double flux est représenté schématiquement sur la **figure 1****.** Le turboréacteur 1 comprend dans le sens d'écoulement d'air selon l'axe du moteur, une soufflante 2, un compresseur basse pression 3, un compresseur haute pression 4, une chambre de combustion 5, une turbine haute pression 6, une turbine basse pression 7 et une tuyère propulsive (non représentée).

La soufflante 1 et le compresseur basse pression 3 sont reliés à la turbine basse pression 7 par un premier arbre de transmission 9, tandis que le compresseur haute pression 4 et la turbine haute pression 6 sont reliés par un deuxième arbre de transmission 10.

En fonctionnement, un écoulement d'air comprimé par les compresseurs basse et haute pression 3 et 4 alimente une combustion dans la chambre de combustion 5. Les turbines 6,7 récupèrent de l'énergie cinétique issue de l'expansion des gaz de combustion avant de la restituer aux compresseurs 3,4 et à la soufflante 2 via les arbres de transmission 9,10.

### Alliages d'aluminure de titane

En fonctionnement, les aubes de turbine basse pression sont sollicitées à de très hautes températures et subissent d'importantes contraintes mécaniques et thermiques.

Dans certains moteurs, les aubes de turbine basse pression sont désormais réalisées en aluminure de titane (TiAl).

Le TiAl, alliage de titane et d'aluminium, est en effet un matériau extrêmement performant. En particulier, il présente d'excellentes propriétés mécaniques à de très hautes températures (T > 650 °C) ; il est d'une densité qui permet de diviser au moins par deux la masse d'une aube par rapport aux alliages de nickel utilisés traditionnellement dans les turbines basse pression.

Notamment, un alliage de titane communément utilisé pour les aubes de turbine basse pression de turbomachine est le TiAl « 48-2-2 », de formule Ti₄₈Al₄₈Cr₂Nb₂ (en at. %). D'autres alliages de composition Ti₄₅₋₅₂-Al₄₅₋₄₈-X₁₋₃-Y₂₋₅-Z_{<1} , où : X = Cr, Mn, V ; Y = Nb, Ta, W, Mo ; Z= Si, B, C ou d'autres impuretés accidentelles, sont également envisageables.

### Propriétés mécaniques et morphologie de microstructures selon le traitement thermique

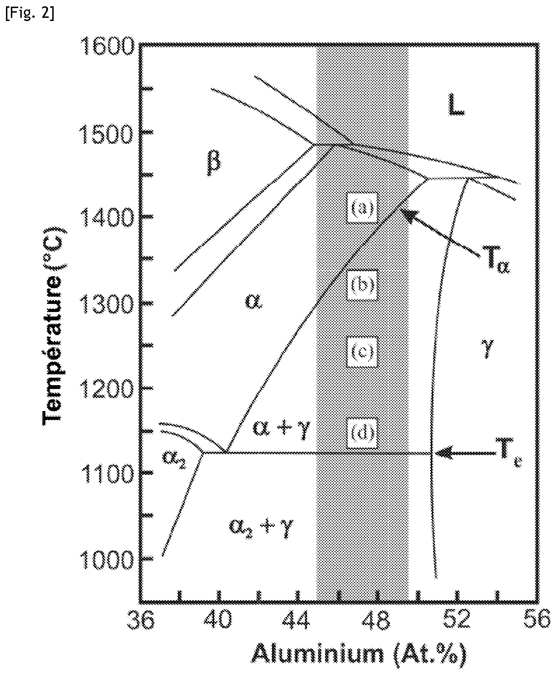

Le diagramme de phases d'un alliage TiAl (Ti (gauche) et Al (droite)) est illustré sur la **figure 2****.** La gamme de température est de 950-1600°C et la teneur atomique en aluminium est de 36-56 at.%. Le diagramme présente cinq domaines monophasés :
- le domaine liquide L ;
- le domaine de solution solide primaire α de Al dans Ti ;
- le domaine de solution solide primaire γ de Ti dans Al ;
- le domaine de solution solide primaire α₂ de Al dans Ti ;
- le domaine de solution solide primaire β ;

Comme on le comprend à travers cette figure 2, les traitements thermiques que l'on fait subir à l'alliage lors de la fabrication ont un impact fort sur les microstructures obtenues pour l'alliage.

Ainsi :
- avec un traitement thermique effectué au-dessus de la température T_{α} de transition de la phase α vers la phase γ, une microstructure totalement lamellaire est formée ; cette microstructure est composée de plaques de phase α (zone (a)) ;
- avec un traitement thermique effectué légèrement en-dessous de la température T_{α}, on obtient une structure presque lamellaire, composée des plaques de phases α et γ alternées qui s'empilent en lamelles en créant des grains d'aspect zébré (zone (b)) ;
- avec un traitement thermique effectué à des températures intermédiaires entre la température eutectoïde Tₑ et T_{α} , on obtient une microstructure duplex avec une fraction volumique variable des grains lamellaires (grains lamellaires biphasés - zone intermédiaire (c)) ;
- avec un traitement thermique effectué à des températures légèrement au-dessus de la température d'eutectoïde Tₑ, on obtient une microstructure dite presque-gamma (ou « near gamma »), avec une forte teneur de grains équiaxes de phase γ (zone (d)).

Pour des présentations générales sur les alliages de TiAl en lien avec les applications aéronautiques, on pourra avantageusement se référer aux publications suivantes :
- H. Clemens, H. Kestler, Advanced Engineering Materials (2000), 2, No 9 ;
- H. Clemens, H. Kestler, Herstellung, Verarbeitung und Anwendungen von g/TiAl-Basislegierungen Titan und Titanlegierungen, (2002) Wiley-VCH Verlag ;
- Chapter 9 - Titanium alloys for aerospace structures and engines, Introduction to Aerospace Materials, Woodhead Publishing, 2012 ;
- B. P. Bewlay, S. Nag, A. Suzuki & M. J. Weimer, Materials at High Temperatures (2016), 33:4-5, 549-559 ;
- F. Appel, R. Wagner, Materials Science and Engineering R22 (1998) 187-268 ;
- J. Lapin, M. Nazmy, Materials Science and Engineering A 380 (2004) 298-307.

### Usinage des barreaux et compression isostatique à chaud

Une technique de fabrication des aubes de turbine basse pression consiste à usiner dans la masse des barreaux en aluminure de titane.

Le terme « barreau » doit s'entendre ici de manière assez large. Il désigne un produit non fini, de forme générale cylindrique. Une fois obtenues, les barreaux font l'objet d'un usinage. Différents traitements thermiques peuvent également être prévus avant, pendant ou après usinage, pour donner naissance aux aubes.

On sait que pour faciliter l'usinage des barreaux, il est souhaitable que ces dernières ne présentent pas de porosités.

On connait déjà des traitements thermiques de l'alliage TiAl dans lesquels on met en œuvre une compression isostatique à chaud (CIC) sur les barreaux.

La compression isostatique à chaud consolide les matériaux à des températures inférieures à leur température de fusion et permet de fermer les porosités.

Afin d'obtenir la microstructure souhaitée, la phase de compression isostatique à chaud est combinée avec d'autres phases de traitement thermique, qui contribuent à la génération des grains γ, typiquement :
- un traitement d'homogénéisation à chaud préalable à la phase de CIC, suivi d'un refroidissement jusqu'à température ambiante,
- un traitement à chaud de relaxation des contraintes et de formation de la microstructure, postérieur à la phase de CIC et à un refroidissement à température ambiante, ce traitement à chaud étant lui-même d'un refroidissement contrôlé.

Les alliages obtenus à l'issue de ces différentes phases sont classiquement des alliages à microstructure duplex avec au mieux 60/70 % de grains monophasés γ (60/70% du volume), le complément étant en grains lamellaires α+ γ.

De tels alliages duplex ont l'avantage de présenter les propriétés mécaniques souhaitées à température élevée, d'être d'une faible densité et de présenter, à froid, les caractéristiques de ductilité/résistance attendues pour permettre une installation ou un démontage des aubes.

Les traitements thermiques avec compression isostatique à chaud connus à ce jour ont néanmoins l'inconvénient majeur d'être particulièrement couteux.

Notamment, les différentes phases de traitement à chaud et les refroidissements entre ces phases imposent des temps de cycle particulièrement importants (jusqu'à 11 /12H).

En outre, les différentes manipulations des barreaux, avec entrées et sorties des fours, génèrent des pertes d'aluminium qui peuvent ne pas être négligeables.

Les documents US5609608, US2013251537, EP2641984, US5350466 et US 5 609 698A donnent différents exemples de traitement thermique postérieur à la compression isostatique sur des alliages Ti-Al.

### EXPOSE DE L'INVENTION

Un but général de l'invention est de pallier les inconvénients de l'art antérieur. Notamment un but de l'invention est de proposer une solution qui permet d'obtenir un alliage TiAl qui présente des propriétés mécaniques compatibles avec ce qui est attendu pour les aubes de turbine basse pression de turbomachine, tant à température élevée (températures de fonctionnement de la turbine basse pression), qu'à froid (installation, démontage de l'aube).

Un autre but encore de l'invention est de proposer une solution qui permet une bonne usinabilité des barreaux, tout en étant optimale en termes de coûts.

Notamment, selon un aspect, il est proposé un procédé qui permet la réalisation de barreaux sans porosités en un alliage d'aluminure de titane à microstructure aussi proche que possible du 100% γ (presque 100% γ).

Par microstructure presque 100% γ (« near fully γ » selon la terminologie anglosaxonne), on entend ici et dans tout le présent texte une microstructure avec au moins 90% de grains monophasés γ (90% du volume ou plus) et donc avec moins de 10% de grains lamellaires α+ γ (10% du volume ou moins).

Les pièces ainsi obtenues présentent des qualités optimales en termes d'usinabilité et de propriétés mécaniques à haute température comme à froid.

Le procédé proposé a en outre l'avantage de réduire fortement le temps de cycle : il est mis en œuvre en un seul traitement thermique, sans refroidissement intermédiaire jusqu'à température ambiante entre les étapes de ce traitement.

Ainsi, l'invention telle que donnée dans les revendications propose un procédé de traitement thermique d'au moins un barreau en alliage d'aluminure de titane pour la fabrication d'au moins une aube de turbine basse pression de turbomachine, comprenant une compression isostatique à chaud du barreau, caractérisée en ce que ladite compression isostatique à chaud est suivie, à l'issue d'une phase de transition de température, d'une étape de traitement thermique du barreau à une température au voisinage immédiat de la température d'eutectoïde de l'alliage, ladite température étant adaptée à la formation d'une microstructure d'alliage avec une fraction volumique d'au moins 90% de grains monophasés γ et une fraction volumique d'au plus 10% de grains lamellaires α+ γ, ladite étape étant suivie d'une étape de refroidissement contrôlé.

On notera qu'aucun des documents US5609608, US2013251537, EP2641984, US5350466 cités ci-dessus ne s'intéresse aux configurations « near gamma ». Aucun d'entre eux ne donne d'enseignement sur la façon d'obtenir une telle configuration grâce à un traitement thermique à une température cible correspondant à la température d'eutectoïde.

Aucun de ces documents ne prévoit par ailleurs de refroidissement contrôlé.

Un tel procédé est avantageusement complété par les différentes caractéristiques suivantes prises seules ou selon leurs combinaisons techniquement possibles :
- l'ensemble des étapes dudit traitement sont mises en œuvre dans un même four ;
- la compression isostatique à chaud est mise en œuvre à une température comprise entre 1175°C et 1195°C, à une pression d'au moins 1300 bars, pendant une durée comprise entre 3H et 5H ;
- le traitement thermique qui suit la compression isostatique à chaud (12) s'effectue à une température cible de 1150°C +/- 20°C, préférentiellement +/- 10°C, pendant une durée comprise entre 3H et 7H
- la température du traitement thermique qui suit la compression isostatique à chaud est ajustée en fonction de la teneur en oxygène du four dans lequel ledit traitement thermique est mis en œuvre ;
- la durée de la phase de transition en température est de 60 minutes ou inférieure ;
- le refroidissement contrôlé est effectué avec un taux de refroidissement compris entre 2 et 56°C/min, jusqu'à une température comprise entre 580°C et 620°C..

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1]
   - La **figure 1****,** déjà décrite, illustre schématiquement une turbomachine ;
[Fig. 2]
   - La **figure 2****,** déjà décrite, est un diagramme de phase d'un alliage TiAl ;
[Fig. 3]

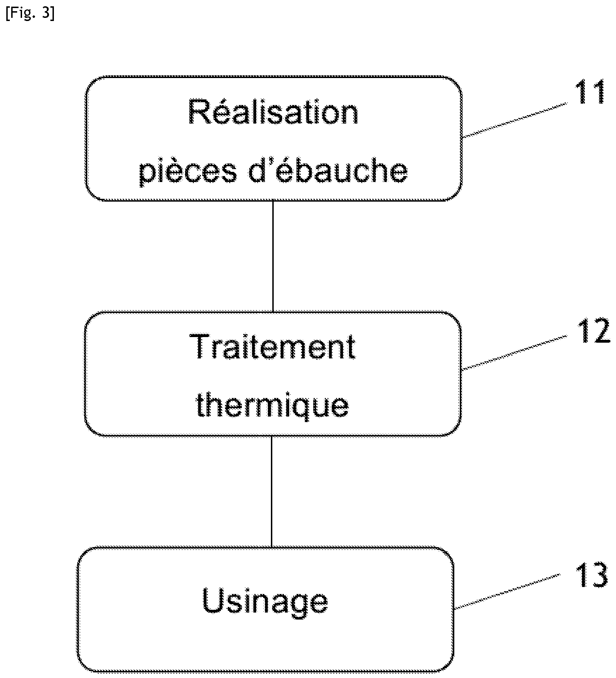

   - La **figure 3** est un organigramme illustrant les principales étapes d'un procédé de fabrication d'aubes en alliage d'aluminure de titane pour turbine basse pression de turbomachine, conforme à un mode de mise en œuvre possible de l'invention ;
[Fig. 4]

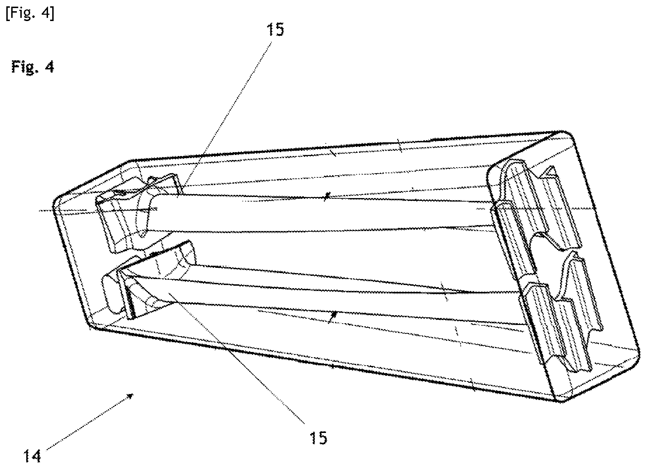

   - La **figure 4** représente schématiquement en vue en perspective un barreau dans laquelle au moins deux aubes sont destinées à être usinées ;
[Fig. 5]

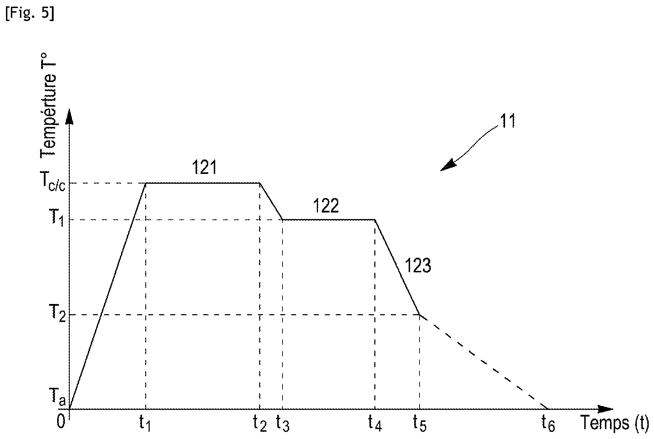

   - La **figure 5** est un diagramme température/temps illustrant les différentes phases de l'étape de traitement thermique du procédé de fabrication de la **figure 3****.**

### DESCRIPTION DETAILLEE DE L'INVENTION

Le procédé de fabrication d'aubes pour turbine basse pression de turbomachine illustré sur la **figure 3** met en œuvre successivement :
- la réalisation des barreaux (étape 11),
- un traitement thermique sur celles-ci (étape 12),
- un traitement d'usinage (étape 13).

### Réalisation des barreaux (étape 11)

Un exemple de barreau 14 (en l'occurrence un barreau), dans laquelle au moins deux aubes 15 sont destinées à être usinées est donné à la **figure 4****.**

Un tel barreau est cylindrique ou polyédrique.

Il a par exemple une longueur comprise entre 20 et 50 cm et des dimensions transversales allant de 1 à 10 cm.

Différentes techniques peuvent être utilisées pour la réalisation de tels barreaux 14 (étape 11).

Notamment, les barreaux 14 peuvent être obtenues par découpe d'un lingot lui-même obtenu soit par moulage (« moulage à la cire perdue » ou « moulage par centrifugation » par exemple), soit par fusion (« fusion par arc plasma » ou « fusion par arc sous vide »).

Des exemples d'obtention en ce sens sont notamment décrits dans la demande WO2014/057222 à laquelle il est ici renvoyé.

L'alliage d'aluminure de titane utilisé pour réaliser les lingots est typiquement un alliage de composition Ti₄₅₋₅₂-Al₄₅₋₄₈-X₁₋₃-Y₂₋₅-Z_{<1} , où : X = Cr, Mn, V ; Y = Nb, Ta, W, Mo ; Z= Si, B, C ou d'autres impuretés accidentelles.

Un alliage préféré est le TiAl « 48-2-2 », d'autres alliage d'aluminure de titane étant néanmoins possibles.

### Traitement thermique des barreaux (étape 12)

Les barreaux 14 ainsi obtenues font ensuite l'objet du traitement thermique illustré sur la **figure 5****.**

Ce traitement combine d'une part une étape 121 de compression isostatique à chaud (traitement CIC) et d'autre part, à la suite de cette étape de CIC et après une phase de transition en température, un traitement thermique 122 pour la création et la germination des grains γ, ce traitement thermique étant lui-même suivi par un refroidissement contrôlé 123.

A cet effet, les barreaux 14 sont mises en place dans un four étanche équipé de moyens permettant de mettre en œuvre une compression isostatique à chaud.
- *Traitement CIC* : Dans une première étape (étape 121 à partir du temps t₁ jusqu'au temps t₂), on met en œuvre une compression isostatique à chaud.

Ce traitement est par exemple mis en œuvre à une température comprise entre 1175°C et 1195°C (température du four) et à une pression d'au moins 1300 bars pendant une durée comprise entre 3 et 5H.

Lors de cette étape de CIC, les porosités internes des barreaux 14 sont refermées.
- *Traitement thermique de création et de germination des grains* γ : l'étape 121 est suivie d'une étape de traitement thermique à une température T1 qui permet la création et la germination des grains γ (étape 122 à partir du temps t3 jusqu'au temps t4).

La température T1 est au voisinage de la température d'eutectoïde. Plus précisément, la température cible est de 1150°C (+/- 20°C soit une température comprise entre 1130°C et 1170°C, préférentiellement +/- 10°C, soit une température comprise entre 1140°C et 1160°C). Dans tout le présent texte, les températures indiquées sont celles des températures à coeur du matériau (obtenues grâce à des capteurs et thermocouple)

La durée de cette étape est au maximum égale à 7 heures, et préférentiellement au moins de 3 heures.

Elle est ajustée en fonction de la teneur en oxygène dans le four pour permettre la création et la germination des grains γ, afin de former la microstructure « presque 100% γ ».

La température d'eutectoïde varie en effet selon la teneur en oxygène. A un taux d'oxygène de 400 ppm, la température T₁ est de 1150°C et elle diminue à 1100°C quand l'oxygène augmente jusqu'à 1000 ppm. La relation est quasiment linaire entre la teneur en oxygène et la température d'eutectoïde.

Dans le cadre du traitement thermique proposé, la température de traitement du matériau est toujours de 1150°C (+/- 20°C, préférentiellement +/- 10°C). Le taux d'oxygène est ajusté de manière empirique.

Pendant cette étape 122, la pression dans le four peut être maintenue à au moins 1300 bars, ce qui permet alors de diminuer le temps de l'étape 121 de CIC

En variante, il peut être prévu de mettre l'alliage sous vide afin de prévenir d'éventuelles réactions chimiques parasites entre l'alliage et des gaz atmosphériques résiduels.

On notera que la transition entre les étapes 121 et 122 (du temps t₂ jusqu'au temps t₃) est obtenu par refroidissement, par exemple sous un gaz inerte tel que de l'argon.

La durée de ce refroidissement est inférieure à 60 minutes et est préférentiellement inférieure à 40 minutes, voire à 20 minutes. Cette durée de refroidissement (t₃-t₂) peut être optimisée en fonction des contraintes industrielles et n'apporte pas d'avantages microstructuraux particuliers.
- *Refroidissement contrôlé* : A l'issue de l'étape 122, les barreaux 14 font l'objet d'un refroidissement contrôlé (étape 123 entre t₄ et t₅ ).

La vitesse de refroidissement est comprise entre 2 et 56°C par minute.

La température à l'issue de ce refroidissement est comprise entre 580°C et 620°C.

Ce refroidissement contrôlé fige les grains lamellaires résiduels et permet d'obtenir les propriétés mécaniques souhaitées.

On notera qu'un refroidissement trop rapide impacterait les propriétés mécaniques. Notamment, il serait susceptible de générer des précipités au sein du grain monophasé γ et d'abaisser les propriétés mécaniques à chaud (en fonctionnement) de celui-ci.

Un tel refroidissement peut par exemple être réalisé avec un four équipé de technologie dite « URC » (ou « Uniform Rapid Cooling » selon la terminologie anglosaxonne généralement utilisée).

Les barreaux 14 font ensuite l'objet d'un refroidissement non contrôlé (à partir de t₅) jusqu'à température ambiante (t₆). Cette étape n'a pas d'effet particulier sur la microstructure.

Comme on l'aura compris, le traitement thermique proposé permet un temps de cycle beaucoup plus court qu'avec les traitements thermiques connus dans l'art antérieur.

Ainsi les pièces ne sont plus sorties du four et mises à température ambiante entre chaque étape, ce qui raccourcit fortement les temps de traitement thermique.

Par ailleurs, le traitement thermique proposé permet d'obtenir une microstructure « near γ » (90%) complétée par les structures lamellaires ou une microstructure 100 % γ avec le procédé selon l'invention. Une microstructure ainsi obtenue présente des qualités optimales entre son usinabilité, son coût de réalisation et ses propriétés mécaniques en haute température pour la fabrication des aubes de turbine basse pression.

### Traitement d'usinage (étape 13)

A l'issue du traitement thermique, les barreaux 14 font l'objet d'un usinage au moyen des outils conventionnellement utilisés à cet effet.

Cet usinage permet d'obtenir les aubes 15 visibles en transparence dans le barreau 14 sur la figure 4. La découpe est alors optimisée pour permettre une utilisation maximale de la matière.

Comme le barreau 14 dont elle est issue, l'aube présente une microstructure d'alliage avec une fraction volumique d'au moins 90% de grains monophasés γ et une fraction volumique d'au plus 10% de grains lamellaires α+ γ.

Une fois découpées, les aubes 15 peuvent encore faire l'objet d'autres traitements (thermiques ou autres) avant d'être considérées comme totalement finalisées.

Également, d'autres traitements thermiques peuvent être prévus sur les barreaux 14 avant usinage.

## Revendications

1. Procédé de traitement thermique d'au moins un barreau (14) en alliage d'aluminure de titane pour la fabrication d'au moins une aube de turbine basse pression de turbomachine,
comprenant une compression isostatique à chaud du barreau,
**caractérisée en ce que** ladite compression isostatique à chaud (121) est suivie, à l'issue d'une phase de transition de température, d'une étape de traitement thermique (122) du barreau à une température au voisinage immédiat d'une température cible de 1150°C +/- 20°C, préférentiellement +/- 10°C, qui est la température d'eutectoïde de l'alliage, pendant une durée comprise entre 3H et 7H, ladite température étant adaptée à la formation d'une microstructure d'alliage avec une fraction volumique d'au moins 90% de grains monophasés γ et une fraction volumique d'au plus 10% de grains lamellaires α+ γ, ladite température étant ajustée en fonction de la teneur en oxygène du four dans lequel ledit traitement thermique est mis en œuvre, ladite étape étant suivie d'une étape de refroidissement contrôlé (123) avec un taux de refroidissement compris entre 2 et 56°C/min jusqu'à une température comprise entre 580°C et 620°C.

2. Procédé de traitement thermique selon la revendication 1, dans lequel la compression isostatique à chaud (121) est mise en œuvre à une température comprise entre 1175°C et 1195°C, à une pression d'au moins 1300 bars, pendant une durée comprise entre 3H et 5H.

3. Procédé de traitement thermique selon l'une des revendications 1 à 2, dans lequel l'ensemble des étapes (121, 122, 123) dudit traitement sont mises en œuvre dans un même four.

4. Procédé selon l'une des revendications précédentes, dans lequel la durée de la phase de transition en température est de 60 minutes ou inférieure.

5. Procédé de fabrication d'au moins une aube de turbine basse pression de turbomachine, dans lequel on met en œuvre les étapes suivantes :
- réalisation d'au moins un barreau (11),
- traitement thermique de ladite pièce (12),
- usinage (13),
**caractérisé en ce que** le traitement thermique met en œuvre le procédé selon l'une des revendications 1 à 4.

## Patentansprüche

1. Verfahren zur Wärmebehandlung von mindestens einem Rohling (14) aus Titanaluminidlegierung zur Herstellung von mindestens einer Niederdruckturbinenleitschaufel einer Strömungsmaschine, umfassend eine heißisostatische Pressung des Rohlings,
**dadurch gekennzeichnet, dass** die heißisostatische Pressung (121) nach einer Temperaturübergangsphase von einem Schritt der Wärmebehandlung (122) des Rohlings gefolgt ist bei einer Temperatur im unmittelbaren Bereich einer Zieltemperatur von 1150 °C +/- 20 °C, vorzugsweise +/- 10 °C, die die eutektoide Temperatur der Legierung ist, während einer Dauer zwischen 3 Stunden und 7 Stunden, wobei die genannte Temperatur an die Ausbildung einer Legierungsmikrostruktur mit einem Volumenanteil von mindestens 90 % einphasiger γ-Körner und einem Volumenanteil von höchstens 10 % lamellarer α+γ-Körner angepasst ist, wobei die genannte Temperatur in Abhängigkeit vom Sauerstoffgehalt des Ofens, in dem die genannte Wärmebehandlung durchgeführt wird, eingestellt wird, wobei der genannte Schritt von einem Schritt der kontrollierten Abkühlung (123) mit einer Abkühlrate zwischen 2 und 56 °C/min bis zu einer Temperatur zwischen 580 °C und 620 °C gefolgt ist.

2. Wärmebehandlungsverfahren nach Anspruch 1, bei dem die heißisostatische Pressung (121) bei einer Temperatur zwischen 1175 °C und 1195 °C, bei einem Druck von mindestens 1300 bar, während einer Dauer zwischen 3 Stunden und 5 Stunden durchgeführt wird.

3. Wärmebehandlungsverfahren nach einem der Ansprüche 1 bis 2, bei dem sämtliche Schritte (121, 122, 123) der genannten Behandlung in demselben Ofen durchgeführt werden.

4. Verfahren nach einem der vorhergehenden Ansprüche, bei dem die Dauer der Temperaturübergangsphase 60 Minuten oder weniger beträgt.

5. Verfahren zur Herstellung von mindestens einer Niederdruckturbinenleitschaufel einer Strömungsmaschine, bei dem die folgenden Schritte durchgeführt werden:
- Herstellung von mindestens einem Rohling (11),
- Wärmebehandlung des genannten Werkstücks (12),
- Bearbeitung (13),
**dadurch gekennzeichnet, dass** die Wärmebehandlung das Verfahren nach einem der Ansprüche 1 bis 4 umsetzt.

## Claims

1. A method for the heat treatment of at least one bar (14) made from titanium aluminide alloy for manufacturing at least one blade of a low-pressure turbine of a turbomachine, comprising hot isostatic pressing of the bar,
**characterized in that** said hot isostatic pressing (121) is followed, after a temperature transition phase, by a step of heat treatment (122) of the bar at a temperature in the immediate vicinity of a target temperature of 1150°C +/- 20°C, preferably +/- 10°C, that is the eutectoid temperature of the alloy, for a time period of between 3 hours and 7 hours, said temperature being suitable for the formation of an alloy microstructure with a volume fraction of at least 90% single-phase γ grains and a volume fraction of at most 10% lamellar α+γ grains, said temperature being adjusted depending on the amount of oxygen in the furnace in which said heat treatment is implemented, said step being followed by a step (123) of controlled cooling at a cooling rate of between 2 and 56°C/minute to a given temperature of between 580°C and 620°C.

2. The heat treatment method according to claim 1, in which the hot isostatic pressing (121) is implemented at a temperature of between 1175°C and 1195°C, at a pressure of at least 1300 bar, for a time period of between 3 hours and 5 hours.

3. The heat treatment method according to any one of claims 1 to 2, in which all of the steps (121, 122, 123) of said treatment are implemented in the same furnace.

4. The method according to one of the preceding claims, in which the duration of the temperature transition phase is 60 minutes or less.

5. A method for manufacturing at least one blade of a low-pressure turbine of a turbomachine, in which the following steps are implemented:
- production of at least one bar (11),
- heat treatment of said part (12),
- machining (13),
**characterized in that** the heat treatment implements the method according to any one of claims 1 to 4.
